# EUROPEAN PATENT SPECIFICATION

(11) **EP 4 443 222 B1**
(45) Date of publication and mention of the grant of the patent: **30.09.2026**
(21) Application number: 22914801.0
(22) Date of filing: 27.12.2022
(51) Int. Cl.: G02F 1/1335, G02B 5/04, F21V 8/00, G02F 1/13357

(54) **BACKLIGHT STRUCTURE, DISPLAY, AND ELECTRONIC DEVICE**
RÜCKBELEUCHTUNGSSTRUKTUR, ANZEIGE UND ELEKTRONISCHE VORRICHTUNG
STRUCTURE DE RÉTROÉCLAIRAGE, AFFICHAGE ET DISPOSITIF ÉLECTRONIQUE

(30) Priority: 31.12.2021 CN 202111672594
(43) Date of publication of application: 09.10.2024
(73) Proprietor: Huawei Technologies Co., Ltd., Shenzhen, Guangdong 518129 (CN)
(72) Inventor: CHANG, Yiwen, Shenzhen, Guangdong 518129 (CN); DOU, Kaihua, Shenzhen, Guangdong 518129 (CN); ZHANG, Shuguang, Shenzhen, Guangdong 518129 (CN)
(74) Representative: Maiwald GmbH
(86) International application number: PCT/CN2022/142387
(87) International publication number: WO 2023/125548

(56) References cited:
- CN-A- 101 171 533
- CN-A- 101 363 924
- CN-A- 102 809 774
- CN-A- 108 692 221
- CN-A- 111 090 141
- CN-A- 111 624 817
- CN-A- 113 075 813
- CN-A- 114 355 669
- JP-A- 2011 227 341
- US-A1- 2016 067 931
- US-A1- 2023 117 666

## Description

This application claims priority to Chinese Patent Application No. 202111672594.7, filed with the China National Intellectual Property Administration on December 31, 2021 and entitled "BACKLIGHT STRUCTURE, DISPLAY, AND ELECTRONIC DEVICE".

### TECHNICAL FIELD

This application relates to the field of display technologies, and in particular, to a backlight structure, a display, and an electronic device.

### BACKGROUND

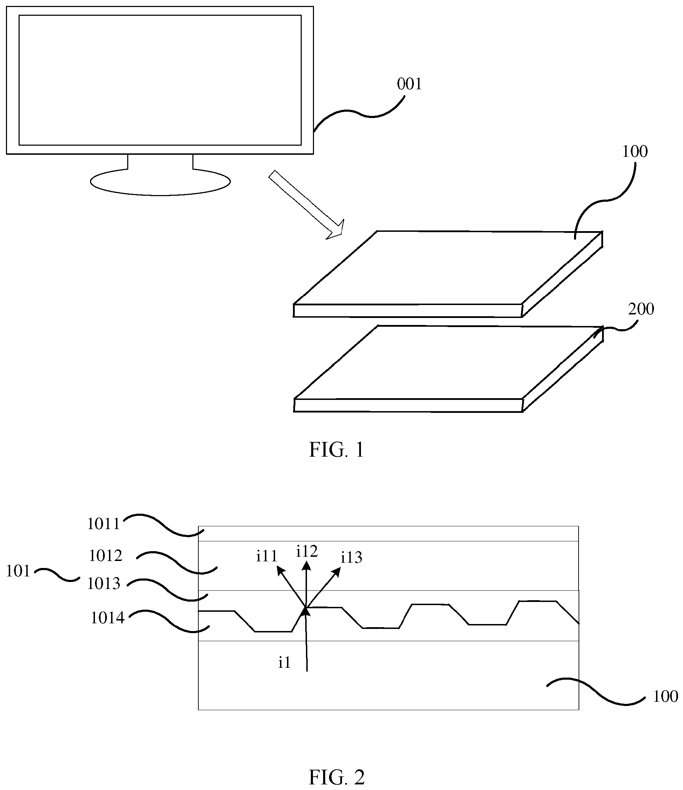

Currently, with development of display technologies, electronic devices such as computers and televisions all develop towards a large scale, and liquid crystal displays are widely used in various electronic devices such as computers and televisions due to features of high resolution and high brightness of the liquid crystal display. As shown in FIG. 1, a liquid crystal display 001 usually includes a display screen 100 and a backlight structure 200 that is connected to a surface opposite to a display surface of the display screen 100. Light emitted by the backlight structure 200 is usually emitted towards a center of the display screen 100, and an emission angle of the light is usually within a small range. Therefore, in the large-sized liquid crystal display 001, when a user views the liquid crystal display 001 from a different angle, brightness of an image seen by the user is different. For example, brightness of the display screen 100 viewed by the user when the display screen 100 is viewed from a front-view angle is far greater than brightness of the display screen viewed from a side-view angle. In other words, overall brightness of the screen is low when the screen is viewed from a large viewing angle.

In a conventional technology, as shown in FIG. 2, a viewing angle of the display screen is usually increased by attaching a wide viewing angle film 101 to the display surface of the display screen 100. Specifically, as shown in FIG. 2, the wide viewing angle film 101 includes a first substrate 1011, a second substrate 1012, a functional layer 1013, and a connection layer 1014 that are sequentially stacked from top to bottom. The connection layer 1014 is connected to a surface of the display screen 100. The functional layer 1013 includes a plurality of inverted trapezoid structures. When light emitted from the display screen 100 is incident to the trapezoid structure, the light is scattered in different directions. For example, as shown in FIG. 2, when light i1 is incident to the trapezoid structure, scattered light in different directions, for example, i11, i12, and i13, are formed, to implement wide viewing angle display of the liquid crystal display. Exemplary backlight structures are described in e.g., US 2016/067931 A1 and CN 111 624 817 A.

However, in the foregoing technical solution, because the wide viewing angle film 101 is added, and the wide viewing angle film 101 absorbs light to some extent, a specific brightness loss is caused. In addition, light emitted by the backlight structure is scattered for a second time at the wide viewing angle film, and a part of light of a single pixel is scattered to an adjacent pixel. This causes optical crosstalk of a displayed image and image quality deterioration.

### SUMMARY

To resolve the foregoing problem, embodiments of this application provide a backlight structure, a display, and an electronic device. The invention is set out in the appended set of claims.

According to a first aspect, an embodiment of this application provides a backlight structure, including a light source layer, an optical functional structure layer, and a brightness enhancement film structure layer, where the light source layer, the optical functional structure layer, and the brightness enhancement film structure layer are stacked in a first direction.

The brightness enhancement film structure layer includes at least one brightness enhancement film layer, and each of the at least one brightness enhancement film layer includes a substrate and a prism column layer that are stacked and connected.

The prism column layer includes at least one protrusion structure disposed on the substrate.

In a possible implementation of the first aspect, the at least one protrusion structure includes an arc-shaped protrusion structure and/or an angle-shaped protrusion structure.

In a possible implementation of the first aspect, the arc-shaped protrusion structure is a dot-type arc-shaped structure, a strip-type arc-shaped protrusion structure, or a multi-segment arc-shaped protrusion structure.

The angle-shaped protrusion structure is a dot-type angle-shaped protrusion structure, a strip-type angle-shaped protrusion structure, and a multi-segment angle-shaped protrusion structure.

It may be understood that in this embodiment of this application, the strip-type arc-shaped protrusion may be of an arc-shaped column structure mentioned below. The strip-type angle-shaped protrusion includes a prism structure, and the prism structure includes a triangular prism structure, a trapezoidal prism structure, or another prism structure.

It may be understood that in this embodiment of this application, a structure of the brightness enhancement film structure layer of the backlight structure in the display is designed. Specifically, a plurality of prism columns in the brightness enhancement film layer are disposed as a prism column of an arc-shaped column structure or an angle-shaped prism structure. In this way, a light emission angle of the brightness enhancement film structure layer can be effectively increased without adding a wide viewing angle film. This can improve overall brightness of the display when the display is viewed from a large viewing angle, and implement wide viewing angle display of the display.

According to the claimed invention, the at least one brightness enhancement film layer specifically includes a first brightness enhancement film layer and a second brightness enhancement film layer that are stacked in the first direction.

The first brightness enhancement film layer includes a first substrate and a first prism column layer that are stacked and connected, the first prism column layer includes a plurality of first prism columns that are connected in parallel, and all the plurality of first prism columns that are connected in parallel are of prism structures.

The second brightness enhancement film layer includes a second substrate and a second prism column layer that are stacked and connected, the second prism column layer includes a plurality of second prism columns that are connected in parallel, and all the plurality of second prism columns that are connected in parallel are of arc-shaped column structures.

It may be understood that in this embodiment of this application, the second prism column in the second brightness enhancement film layer is disposed as an arc-shaped column structure. This can effectively improve uniformity of emergent light of the brightness enhancement film structure layer, and expand an angle range of emergent light of the brightness enhancement film structure layer to some extent.

In a possible implementation of the first aspect, the first substrate is connected to the optical functional structure layer.

The first substrate, the first prism column layer, the second prism column layer, and the second substrate are stacked in the first direction; or the first substrate, the first prism column, the second substrate, and the second prism column layer are stacked in the first direction.

In a possible implementation of the first aspect, an included angle between an axial direction of the first prism column and an axial direction of the second prism column is 90 degrees.

In a possible implementation of the first aspect, an angle range of a central angle corresponding to an arc in a cross section of the second prism column is 64 degrees to 70 degrees.

In a possible implementation of the first aspect, a curvature radius corresponding to an arc in a cross section of the second prism column is less than or equal to 24 µm.

In a possible implementation of the first aspect, central angles corresponding to arcs in cross sections of the plurality of second prism columns in the second prism column layer gradually increase in a direction from a central location of the second prism column layer to an edge second prism column.

According to the claimed invention, base angles of the plurality of second prism columns in the second brightness enhancement film layer gradually decrease in the direction from a center of the first substrate layer to the edge of the second prism column layer. In this way, an angle of emergent light of the second prism column at the edge of the second brightness enhancement film layer can be small. This can reduce a quantity of emergent light to a side surface of the second brightness enhancement film layer, and reduce a light energy loss.

In a possible implementation of the first aspect, the plurality of first prism columns in the first prism column layer are of structures of a same size.

In a possible implementation of the first aspect, the first prism column includes a first contact surface connected to the first substrate, and a first light-out surface and a second light-out surface that are connected to the first contact surface.

An included angle between the first light-out surface and the first contact surface ranges from 37 degrees to 55 degrees, and an angle range of an included angle between the second light-out surface and the first contact surface is 37 degrees to 55 degrees.

In a possible implementation of the first aspect, vertex angles that are of the plurality of first prism columns in the first prism column layer and that are opposite to the first substrate gradually increase in the direction from the central location of the second prism column layer to the edge second prism column.

It may be understood that in this embodiment of this application, the vertex angles that are of the plurality of first prism columns and that are opposite to the first substrate are set to gradually increase in the direction from the central location of the second prism column layer to the edge second prism column, so that an angle of emergent light of the first prism column at the edge of the first brightness enhancement film layer is small. This can reduce a quantity of emergent light to a side surface of the first brightness enhancement film layer, and reduce a light energy loss.

The at least one brightness enhancement film layer specifically includes a first brightness enhancement film layer and a second brightness enhancement film layer that are stacked in the first direction.

The first brightness enhancement film layer includes a first substrate and a first prism column layer that are stacked and connected, the first prism column layer includes a plurality of first prism columns that are connected in parallel, and all the plurality of first prism columns that are connected in parallel are of arc-shaped column structures.

The second brightness enhancement film layer includes a second substrate and a second prism column layer that are stacked and connected, the second prism column layer includes a plurality of second prism columns that are connected in parallel, and all the plurality of second prism columns that are connected in parallel are of arc-shaped column structures.

In this embodiment of this application, the first prism column and the second prism column are both disposed to be of arc-shaped column structures. This can further expand an angle range of emergent light of the brightness enhancement film structure layer.

In a possible implementation of the first aspect, the at least one brightness enhancement film layer specifically includes a third brightness enhancement film layer.

The third brightness enhancement film layer includes a third substrate and a third prism column layer that are stacked and connected, the third prism column layer includes a plurality of third prism columns that are connected in parallel, and all the plurality of second prism columns that are connected in parallel are of arc-shaped column structures.

In this embodiment of this application, the brightness enhancement film structure layer includes only one third brightness enhancement film layer, and the prism column of the third brightness enhancement film layer is disposed as an arc-shaped column structure. This can save costs and increase an angle range of emergent light of the brightness enhancement film structure layer.

In a possible implementation of the first aspect, the plurality of third prism columns in the third prism column layer are of structures of a same size.

In a possible implementation of the first aspect, an angle range of a central angle corresponding to an arc in a cross section of the third prism column is 64 degrees to 118 degrees.

In a possible implementation of the first aspect, a curvature radius corresponding to an arc in a cross section of the third prism column is 5 µm to 24 µm.

In a possible implementation of the first aspect, central angles corresponding to arcs in cross sections of the plurality of third prism columns in the third prism column layer gradually increase in a direction from a central location of the third prism column layer to an edge second prism column.

It may be understood that in this embodiment of this application, the central angles corresponding to the arcs in the cross sections of the plurality of third prism columns are set to gradually increase in the direction from the central location of the third prism column layer to the edge second prism column, so that an angle of emergent light of the third prism column at the edge of the third brightness enhancement film layer is small. This can reduce a quantity of emergent light to a side surface of the third brightness enhancement film layer, and reduce a light energy loss.

The at least one brightness enhancement film layer specifically includes a first brightness enhancement film layer and a second brightness enhancement film layer that are stacked in the first direction.

The first brightness enhancement film layer includes a first substrate and a first prism column layer that are stacked and connected, the first prism column layer includes a plurality of first prism columns that are connected in parallel, and all the plurality of first prism columns that are connected in parallel are of prism structures.

The second brightness enhancement film layer includes a second substrate and a second prism column layer that are stacked and connected, the second prism column layer includes a plurality of second prism columns that are connected in parallel, and all the plurality of second prism columns that are connected in parallel are of prism structures.

In a possible implementation of the first aspect, the first substrate is connected to the optical functional structure layer.

The first substrate, the first prism column layer, the second prism column layer, and the second substrate are stacked in the first direction; or the first substrate, the first prism column, the second substrate, and the second prism column layer are stacked in the first direction.

In a possible implementation of the first aspect, an included angle between an axial direction of the first prism column and an axial direction of the second prism column is greater than 90 degrees.

In this embodiment of this application, an included angle between an axial direction of the first brightness enhancement film layer and an axial direction of the second brightness enhancement film layer is also set to be greater than 90 degrees, so that a quantity of light reflected back to a light source can be reduced, and a quantity of emergent light at a large angle can be increased. This expands a range and increases total energy of overall emergent light of the brightness enhancement film structure layer to some extent.

The included angle between the axial direction of the first prism column and the axial direction of the second prism column may be set to 140 degrees to 180 degrees.

In a possible implementation of the first aspect, the first prism column includes a first contact surface connected to the first substrate, and a first light-out surface and a second light-out surface that are connected to the first contact surface; and an included angle between the first light-out surface and the first contact surface ranges from 31 degrees to 37 degrees, and an angle range of an included angle between the second light-out surface and the first contact surface is 31 degrees to 37 degrees.

The second prism column includes a second contact surface connected to the second substrate, and a third light-out surface and a fourth light-out surface connected to the second contact surface; and an included angle between the third light-out surface and the fourth contact surface ranges from 31 degrees to 37 degrees, and an angle range of an included angle between the third light-out surface and the second contact surface is 31 degrees to 37 degrees.

In this embodiment of this application, an angle range of a vertex angle of each of the first brightness enhancement film layer and the second brightness enhancement film layer is set to 106 degrees to 118 degrees, that is, an angle range of a base angle of the first brightness enhancement film layer is 31 degrees to 37 degrees. Compared with some embodiments, for example, compared with a solution in which the vertex angle of the first brightness enhancement film layer is 90 degrees, this setting solution can increase a quantity of emergent light at a large angle. This expands a range and increases total energy of overall emergent light of the first brightness enhancement film layer to some extent.

In a possible implementation of the first aspect, the prism column layer includes a first edge region, a second edge region, and a middle region, and the middle region is sandwiched between the first edge region and the second edge region.

A prism column in the middle region is of an arc-shaped column structure, and a prism column in the first edge region and the second edge region is of a prism structure.

It may be understood that because a light divergence angle of an arc-shaped structure is larger, the prism column in the middle region is disposed as the arc-shaped column structure, so that an emergent angle range of the emergent brightness enhancement film layer can be effectively expanded. A light divergence angle of a prism structure with a vertex angle of 90 degrees is small. Therefore, the prism column in the first edge region and the second edge region may be disposed as a triangular prism with a vertex angle of 90 degrees. This can prevent much light from being emitted from an edge region of the brightness enhancement film layer, and reduce a light energy loss.

In a possible implementation of the first aspect, the prism structure includes a triangular prism structure or a trapezoidal prism structure.

In a possible implementation of the first aspect, the arc-shaped column structure includes a half-cylinder structure or a half-elliptic cylinder structure.

In a possible implementation of the first aspect, the optical functional structure layer includes a light diffusion layer, a light-selective transmission layer, and a color conversion film layer that are stacked in the first direction.

A second aspect of embodiments of this application provides a display, including a display component and the backlight structure, where the display component is disposed on a surface of a brightness enhancement film structure layer in a first direction.

A third aspect of embodiments of this application provides an electronic device, including the display.

### BRIEF DESCRIPTION OF DRAWINGS

FIG. 1 is a diagram of a structure of a liquid crystal display according to some embodiments of this application;
FIG. 2 is a diagram of a structure of a wide viewing angle film according to some embodiments of this application;
FIG. 3 is an exploded view of a backlight structure according to some embodiments of this application;
FIG. 4a is a diagram of a structure of an arrangement of a first brightness enhancement film layer and a second brightness enhancement film layer which is not according to the claimed invention;
FIG. 4b is a diagram of light propagation in a first brightness enhancement film layer whose vertex angle is separately 90 degrees and greater than 90 degrees according to some embodiments of this application;
FIG. 5 is a simulation diagram of light field distribution of a backlight structure when a first brightness enhancement film layer and a second brightness enhancement film layer are of a same structure, axial included angles between the first brightness enhancement film layer and the second brightness enhancement film layer are different, and the first brightness enhancement film layer corresponds to different base angles according to some embodiments of this application;
FIG. 6 is a diagram of backlight light field distribution of a backlight structure according to some embodiments of this application;
FIG. 7 is a diagram of a brightness enhancement film structure layer according to some embodiments of this application;
FIG. 8 is a diagram of light propagation of a second brightness enhancement film layer when a shape of a cross section of a second prism column is an arc according to some embodiments of this application;
FIG. 9 is a diagram of light propagation of a second brightness enhancement film layer when a shape of a cross section of a second prism column is a triangle according to some embodiments of this application;
FIG. 10 is a simulation diagram of light field distribution of a backlight structure when a brightness enhancement film structure layer is of a structure shown in FIG. 7, an included angle between an axial direction L1 of a first brightness enhancement film layer and an axial direction L2 of a second brightness enhancement film layer is 90 degrees, and the first brightness enhancement film layer and the second brightness enhancement film layer correspond to different base angles according to some embodiments of this application;
FIG. 11 is a diagram of light field distribution of a backlight structure when a brightness enhancement film structure layer is of a structure shown in FIG. 7, an included angle between an axial direction of a first brightness enhancement film layer and an axial direction of a second brightness enhancement film layer is 90 degrees, and the first brightness enhancement film layer and the second brightness enhancement film layer correspond to different base angles according to some embodiments of this application;
FIG. 12 is a diagram of a structure of a second brightness enhancement film layer according to some embodiments of this application;
FIG. 13a is a diagram of a structure of a third brightness enhancement film layer according to some embodiments of this application;
FIG. 13b is a diagram of a structure of a third brightness enhancement film layer according to some embodiments of this application;
FIG. 14 is a simulation diagram of light field distribution of a backlight structure when a brightness enhancement film structure layer is of a structure shown in FIG. 13a and a third brightness enhancement film layer corresponds to different base angles and different curvature radii according to some embodiments of this application; and
FIG. 15 is a simulation diagram of light field distribution of a backlight structure when a brightness enhancement film structure layer is of a structure shown in FIG. 13a and a third brightness enhancement film layer corresponds to different base angles and different vertex angle curvature radii according to some embodiments of this application.

### Description of reference numerals:

001: liquid crystal display; 100: display screen; 200: backlight structure;
101: wide viewing angle film; 1011: first base; 1012: second base; 1013: functional layer; 1014: connection layer;
201: light source layer; 202: diffusion layer; 203: spectrum-selective transmission film layer; 204: color conversion film layer; 205: first brightness enhancement film; 2051: first substrate; 2052: first prism column; 2053: first contact surface; 2054: first light-out surface; 2055: second light-out surface; 206: second brightness enhancement film layer; 2061: second substrate; 2062: second prism column; 2063: second contact surface; 2064: third light-out surface; 2065: fourth light-out surface; 207: third brightness enhancement film layer; 2071: third substrate; 2072: third prism column.

### DESCRIPTION OF EMBODIMENTS

The following describes implementations of this application by using specific embodiments. A person skilled in the art may easily learn of other advantages and effects of this application based on content disclosed in this specification. Although this application is described with reference to some embodiments, it does not mean that a characteristic of this application is limited only to this implementation. On the contrary, a purpose of describing this application with reference to implementations is to cover another option or modification that may be derived according to claims of this application. For an in-depth understanding of this application, the following descriptions include many specific details. This application may be alternatively implemented without using these details. In addition, to avoid confusion or obfuscation of a focus of this application, some specific details are omitted from the description. It should be noted that embodiments in this application and the features in embodiments may be mutually combined in a case of no conflict.

It should be noted that in this specification, similar reference numerals and letters in the following accompanying drawings represent similar items. Therefore, once an item is defined in an accompanying drawing, the item does not need to be further defined or interpreted in the following accompanying drawings. In descriptions of this application, it is to be noted that orientation or location relationships indicated by terms "center", "above", "below", "left", "right", "vertical", "horizontal", "inner", "outer", and the like are orientation or location relationships based on the accompanying drawings, and are merely intended for ease of describing this application and simplifying descriptions, but do not indicate or imply that a described apparatus or element needs to have a specific orientation or needs to be constructed and operated in a specific orientation. Therefore, such terms shall not be understood as a limitation on this application. In addition, terms "first" and "second" are merely used for a purpose of description, and shall not be understood as an indication or implication of relative importance.

To make objectives, technical solutions, and advantages of this application clearer, the following further describes implementations of this application in detail with reference to the accompanying drawings.

To resolve the foregoing problem, an embodiment of this application provides a liquid crystal display. A structure of a brightness enhancement film structure layer of a backlight structure in the liquid crystal display is designed. In a case in which no wide viewing angle film is added, this improves overall brightness of the liquid crystal display when the display is viewed from a large viewing angle, and implements wide viewing angle display of the liquid crystal display.

In a first implementation solution, in this embodiment of this application, a degree of a vertex angle of a triangular prism in each brightness enhancement film layer in the brightness enhancement film structure layer is set to a specified angle, to increase a quantity of light emitted from a large angle in the brightness enhancement film layer, and therefore increase a viewing angle of the liquid crystal display, and implement wide viewing angle display of the liquid crystal display. The viewing angle may be understood as a deflectable angle of a line-of-sight direction that is of a user and that is relative to a front-view line-of-sight direction to a display screen when it is ensured that brightness of the display screen viewed by the user is specified brightness.

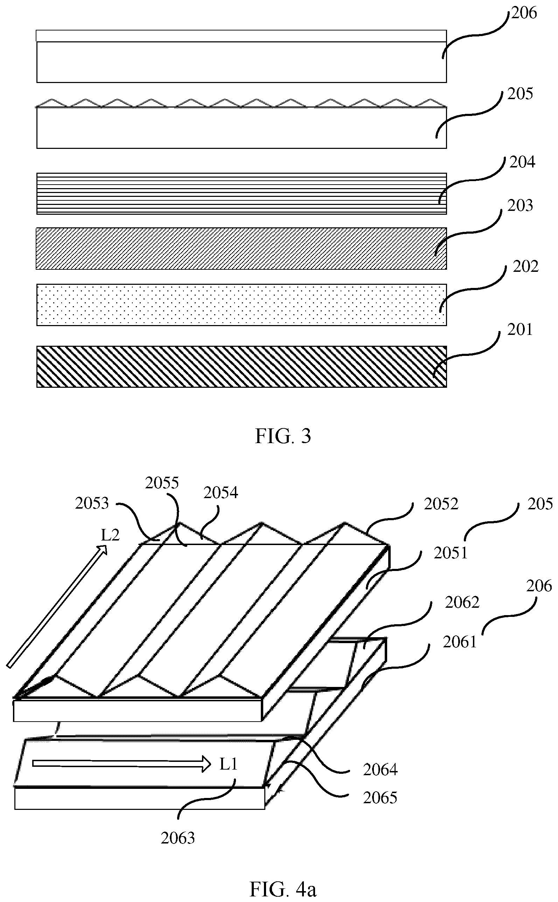

FIG. 3 is an exploded view of a backlight structure according to an embodiment of this application. As shown in FIG. 3, the backlight structure may include a light source layer 201, an optical functional structure layer, and a brightness enhancement film structure layer. The optical functional structure layer includes a diffusion layer 202, a spectrum-selective transmission film layer 203, and a color conversion film layer 204. The brightness enhancement film structure layer includes a first brightness enhancement film 205 and a second brightness enhancement film layer 206. The light source layer 201, the diffusion layer 202, the spectrum-selective transmission film layer 203, the color conversion film layer 204, the first brightness enhancement film 205, and the second brightness enhancement film layer 206 are sequentially stacked and connected from bottom to top.

In some embodiments, the light source layer 201 may have a color conversion function. Therefore, the backlight structure may include only the light source layer 201, the diffusion layer 202, and the brightness enhancement film structure layer that are sequentially stacked and connected from bottom to top.

FIG. 4a is a diagram of a structure of an arrangement of a first brightness enhancement film layer 205 and a second brightness enhancement film layer 206 which is not according to the claimed invention. The first brightness enhancement film layer 205 and the second brightness enhancement film layer 206 may be stacked, and the first brightness enhancement film layer 205 may be disposed below the second brightness enhancement film layer 206.

As shown in FIG. 4a, the first brightness enhancement film layer 205 includes a first substrate 2051 and a first prism column layer that is connected to an upper surface of the first substrate 2051, the first prism column layer includes a plurality of first prism columns 2052 that are disposed in parallel, and the first prism column 2052 is of a triangular prism structure. It may be understood that the triangular prism structure mentioned in this embodiment of this application is a column structure with a triangular cross section. Side surfaces of each of the plurality of first prism columns 2052 include a first contact surface 2053 connected to the substrate, and a first light-out surface 2054 and a second light-out surface 2055 that are adjacent to the first contact surface 2053. Straight lines on which edges corresponding to each first contact surface 2053 of each of the plurality of first prism columns 2052 are located are parallel. In some embodiments, the first light-out surface 2054 and the second light-out surface 2055 may be light-out surfaces of a same size.

For ease of description, in this embodiment of this application, an included angle between the first light-out surface 2054 and the first contact surface 2053 is defined as a base angle of the first brightness enhancement film layer 205, an included angle between the first light-out surface 2054 and the second light-out surface 2055 is defined as a vertex angle of the first brightness enhancement film layer 205, and an extension direction of each connection edge between the first light-out surface 2054 and the second light-out surface 2055 of the first prism column 2052 is defined as an axial direction L1 of the first brightness enhancement film layer 205.

In this embodiment of this application, the first substrate 2051 and the plurality of first prism columns 2052 that are disposed in parallel and that are connected to the upper surface of the first substrate 2051 may be made of different materials. The first substrate 2051 may be made of a plastic material, and the first prism column 2052 may be made of a glass material.

The second brightness enhancement film layer 206 includes a second substrate 2061 and a second prism column layer connected to an upper surface of the second substrate 2061. The second prism column layer includes a plurality of second prism columns 2062 that are disposed in parallel. The second prism column 2062 is a triangular prism. Each of the plurality of second prism columns 2062 includes a second contact surface 2063 connected to the second substrate 2061, and a third light-out surface 2064 and a fourth light-out surface 2065 that are adjacent to the second contact surface 2063. Straight lines on which edges corresponding to each second contact surface 2063 of each of the plurality of second prism columns 2062 are located are parallel.

In some embodiments, the third light-out surface 2064 and the fourth light-out surface 2065 may be a same light-out surface. For ease of description, in this embodiment of this application, an included angle between the third light-out surface 2064 and the second contact surface 2063 is defined as a base angle of the second brightness enhancement film layer 206, an included angle between the third light-out surface 2064 and the fourth light-out surface 2065 is defined as a vertex angle of the second brightness enhancement film layer 206, and an extension direction of each connection edge between the third light-out surface 2064 and the fourth light-out surface 2065 of the second prism column 2062 is defined as an axial direction L2 of the second brightness enhancement film layer 206.

In this embodiment of this application, the second substrate 2061 and the plurality of first prism columns 2062 that are disposed in parallel and that are connected to the upper surface of the second substrate 2061 may be made of different materials. The second substrate 2061 may be made of a plastic material, and the second prism column 2062 may be made of a glass material.

In some embodiments, an angle range of the vertex angle of the first brightness enhancement film layer 205 may be 106 degrees to 118 degrees, that is, an angle range of the base angle of the first brightness enhancement film layer 205 may be 31 degrees to 37 degrees. Compared with some embodiments, for example, compared with a solution in which the vertex angle of the first brightness enhancement film layer 205 is 90 degrees, this setting solution can increase a quantity of emergent light at a large angle. This expands a range and increases total energy of overall emergent light of the first brightness enhancement film layer 205 to some extent.

In some embodiments, the vertex angle of the second brightness enhancement film layer 206 may range from 106 degrees to 118 degrees, and the base angle of the second brightness enhancement film layer 206 may range from 31 degrees to 37 degrees. Compared with some embodiments, for example, compared with a solution in which the vertex angle of the second brightness enhancement film layer 206 is 90 degrees, this setting solution can increase a quantity of emergent light at a large angle. This expands a range and increases total energy of overall emergent light of the second brightness enhancement film layer 206 to some extent.

Expanding a range and increasing total energy of overall emergent light of the first brightness enhancement film layer 205 can increase a viewing angle of the liquid crystal display 001 in a direction perpendicular to L1, and expanding a range and increasing total energy of overall emergent light of the second brightness enhancement film layer 206 can increase a viewing angle of the liquid crystal display 001 in a direction perpendicular to L2. This can improve uniformity of overall brightness of the liquid crystal display 001, and increase a viewing angle under specified brightness.

The following uses the first brightness enhancement film layer 205 as an example to describe a principle that when the vertex angle of the first brightness enhancement layer 205 is greater than 90 degrees, a quantity of emergent light at a large angle can be increased, and a range of overall emergent light of the first brightness enhancement film layer 205 can be expanded to some extent.

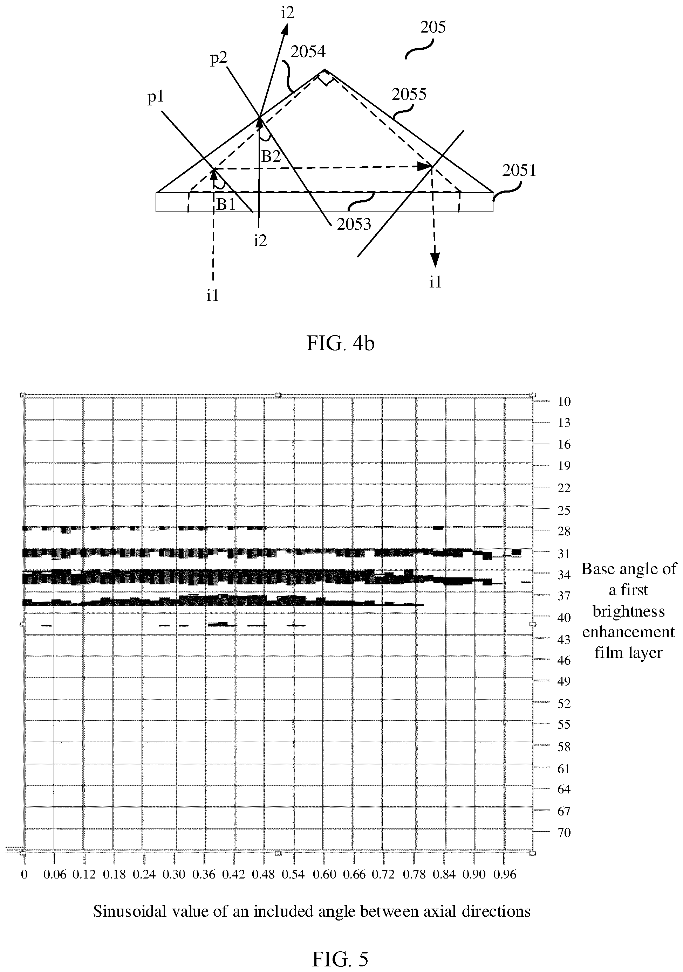

FIG. 4b is a diagram of light propagation in the first brightness enhancement film layer 205 whose vertex angle is separately 90 degrees and greater than 90 degrees according to an embodiment of this application. A cross section of the first brightness enhancement film layer 205 whose vertex angle is 90 degrees is represented by a solid line, and a cross section of the first brightness enhancement film layer 205 whose vertex angle is greater than 90 degrees is represented by a dashed line.

As shown in FIG. 4b, it is assumed that a total reflection angle of the first brightness enhancement film layer 205 of the prism is B1. For example, B1 is 45 degrees, the vertex angle of the first brightness enhancement film layer is 90 degrees, and the base angle of the first brightness enhancement film layer is 45 degrees. There is a large amount of light. When the light is incident to the first light-out surface 2054, the light is totally reflected to the second light-out surface 2055, and is totally reflected from the second light-out surface 2055 toward a direction to a light source. This causes a light energy loss.

For example, if light i1 is incident to the first light-out surface 2054 of the first brightness enhancement film layer 205 at the incident angle B1, that is, 45 degrees, the light i1 is totally reflected to the second light-out surface 2055, and is totally reflected from the second light-out surface 2055 toward the direction to the light source.

However, if the vertex angle of the first brightness enhancement film layer 205 increases, if light i2 is incident, in a direction parallel to i1, to the first light-out surface 2054 of the first brightness enhancement film layer 205 with a larger vertex angle, an incident angle B2 of the light i2 decreases relative to the incident angle B1 of i1. In this way, the light i2 is refracted by the first light-out surface 2054, instead of being totally reflected.

Therefore, when the vertex angle of the first brightness enhancement film layer 205 is greater than 90 degrees, the quantity of emergent light at a large angle can be increased, and the range and the total energy of overall emergent light of the first brightness enhancement film layer 205 can be expanded and increased to some extent.

In some embodiments, the vertex angle of the first brightness enhancement film layer and the vertex angle of the second brightness enhancement film layer may be sharp angles shown in FIG. 4a, or in some embodiments, may be arc angles with a specific radian.

In this embodiment of this application, when the vertex angle of the first brightness enhancement film layer and the vertex angle of the second brightness enhancement film layer are arc angles with a specific radian, curvature radii of the vertex angle of the first brightness enhancement film layer and the vertex angle of the second brightness enhancement film layer may be less than or equal to 16 µm.

In some embodiments, an included angle between the axial direction L1 of the first brightness enhancement film layer 205 and the axial direction L2 of the second brightness enhancement film layer 206 may alternatively be set to be greater than 90 degrees, for example, be set to 140 degrees to 180 degrees. Similarly, a quantity of light reflected back to the light source may be reduced, and a quantity of emergent light at a large angle may be increased, to expand a range and increase total energy of overall emergent light of the brightness enhancement film structure layer to some extent.

FIG. 5 is a simulation diagram of light field distribution of the backlight structure when the first brightness enhancement film layer 205 and the second brightness enhancement film layer 206 are of a same structure, axial included angles between the first brightness enhancement film layer 205 and the second brightness enhancement film layer 206 are different, and the first brightness enhancement film layer 205 corresponds to different base angles according to an embodiment of this application.

In FIG. 5, a horizontal coordinate is a sinusoidal value of the included angle between the axial direction of the first brightness enhancement film layer 205 and the axial direction of the second brightness enhancement film layer 206, and indicates an included angle range of 0 degrees to 90 degrees; and a vertical coordinate is the base angle of the first brightness enhancement film layer 205, and a coordinate range is 10 degrees to 70 degrees. In the figure, the black grid indicates that front-view brightness of the backlight structure is greater than 80% of standard brightness. The gray grid indicates that an L75 viewing angle is greater than ±30 degrees, where L75 indicates 75% of maximum front-view brightness, and that the L75 viewing angle is greater than ±30 degrees indicates that a viewing angle range of 75% of the front-view brightness is greater than a deflection range of 30 degrees of a front-view line of sight.

It can be learned from FIG. 5 that when a range of the base angle of the first brightness enhancement film layer 205 is 31 degrees to 37 degrees, and the axial included angle between the first brightness enhancement film layer 205 and the second brightness enhancement film layer 206 is within a range of 0 degrees to 80 degrees, front-view brightness of the backlight structure may be greater than 80% of standard brightness, and the viewing angle range of 75% of the front-view brightness is greater than a deflection range of 30 degrees of a front-view line of sight. It indicates that the solution provided in this embodiment of this application can increase a viewing angle of the liquid crystal display.

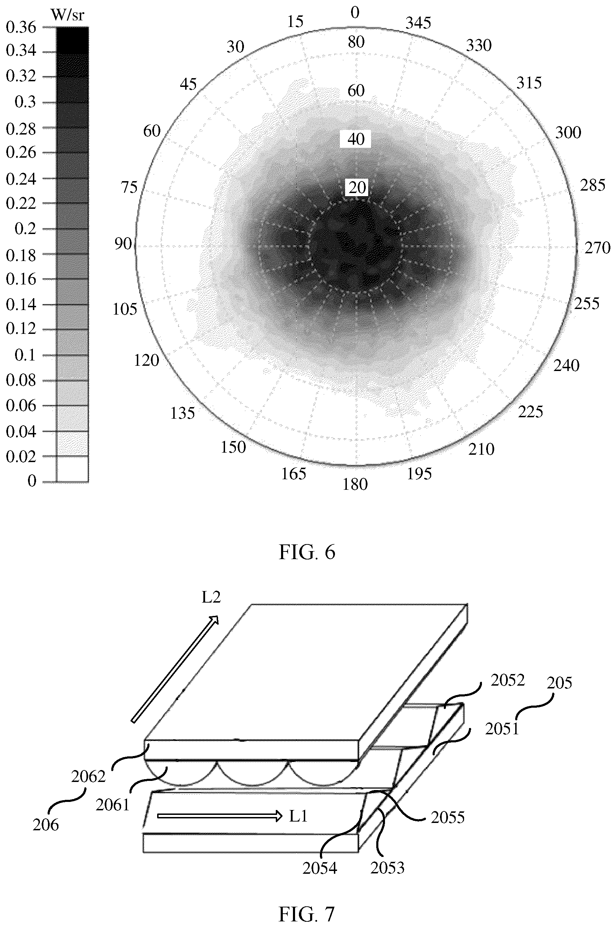

FIG. 6 is a diagram of backlight light field distribution of the backlight structure according to an embodiment of this application. It can be learned from FIG. 6 that when a range of the base angle of the first brightness enhancement film layer 205 is 31 degrees to 37 degrees, and the axial included angle between the first brightness enhancement film layer 205 and the second brightness enhancement film layer 206 is within a range of 0 degrees to 80 degrees, front-view brightness of the backlight structure may be greater than 80% of standard brightness, and the viewing angle range of 75% of the front-view brightness is greater than or equal to a deflection range of 30 degrees of a front-view line of sight (L75 viewing angle is greater than ±30 degrees). A viewing angle range of 50% of the front-view brightness is greater than or equal to a deflection range of 40 degrees of a front-view line of sight (L50 viewing angle is greater than ±40 degrees).

It may be understood that a cross section or a section of the prism column mentioned in embodiments of this application is a section in a direction perpendicular to an axial direction of the prism column or the prism film layer.

In a solution of another embodiment, to further improve uniformity of emergent light in this embodiment of this application, an embodiment of this application provides another backlight structure. A prism column in one of brightness enhancement film layers in the backlight structure is disposed as a prism column of an arc-shaped column structure. It should be noted that in this embodiment of this application, a cross section of the arc-shaped column structure is of a column structure whose cross section is an arc surface, where the arc surface may be a semicircular surface, or an arc surface larger than or smaller than a semicircle. That is, an outline of the cross section of the arc-shaped column structure is enclosed by a straight line and an arc line connected to the head and the end of the straight line. FIG. 7 is a diagram of a brightness enhancement film structure layer according to an embodiment of this application. As shown in FIG. 7, the brightness enhancement film structure layer includes a first brightness enhancement film layer 205 and a second brightness enhancement film layer 206. The first brightness enhancement film layer 205 and the second brightness enhancement film layer 206 are stacked. The first brightness enhancement film layer 205 may be disposed below the second brightness enhancement film layer 206.

As shown in FIG. 7, the first brightness enhancement film layer 205 includes a first substrate 2051 and a first prism column layer connected to an upper surface of the first substrate 2051, and the first prism column layer includes a plurality of first prism columns 2052 that are disposed in parallel. The first prism column 2052 is a triangular prism. Each of the plurality of first prism columns 2052 includes a first contact surface 2053 connected to the substrate, and a first light-out surface 2054 and a second light-out surface 2055 that are adjacent to the first contact surface 2053. Straight lines on which edges corresponding to each first contact surface 2053 of each of the plurality of first prism columns 2052 are located are parallel. In some embodiments, the first light-out surface 2054 and the second light-out surface 2055 may be light-out surfaces of a same size.

For ease of description, in this embodiment of this application, an included angle between the first light-out surface 2054 and the first contact surface 2053 is defined as a base angle of the first brightness enhancement film layer 205, an included angle between the first light-out surface 2054 and the second light-out surface 2055 is defined as a vertex angle of the first brightness enhancement film layer 205, and an extension direction of each connection edge between the first light-out surface 2054 and the second light-out surface 2055 of the first prism column 2052 is defined as an axial direction L1 of the first brightness enhancement film layer 205.

The second brightness enhancement film layer 206 includes a second substrate 2061 and a second prism column layer connected to a lower surface of the second substrate 2061. The second prism column layer includes a plurality of second prism columns 2062 that are disposed in parallel. A cross section of each of the plurality of second prism columns 2062 is an arc, and the arc is an image enclosed by a segment of arc and a straight line. The segment of arc may be a part of an arc of an entire circle, and the segment of straight line may be a chord corresponding to the segment of arc.

In this embodiment of this application, the first prism column 2052 of the first brightness enhancement film layer 205 is disposed opposite to the second prism column 2062 of the second brightness enhancement film layer 206. The first prism column 2052 of the first brightness enhancement film layer 205 may be connected to the second prism column 2062 of the second brightness enhancement film layer 206 by using an optical adhesive.

In this embodiment of this application, the second prism column 2062 includes a second contact surface 2063 connected to the substrate. The second contact surface 2063 may be in a rectangular shape.

In this embodiment of this application, an included angle between an end point tangent of a connection line between the arc-shaped cross section of the second prism column 2062 and the second substrate 2061 and the connection line may be defined as a base angle of the second prism column 2062. A central angle corresponding to the arc in the arc-shaped cross section of the second prism column 2062 is defined as a vertex angle of the second prism column 2062. A direction perpendicular to an arrangement direction of the plurality of second prism columns 2062 in the second brightness enhancement film layer is defined as an axial direction L2 of the second brightness enhancement film layer 206.

In some embodiments, the first prism column 2052 of the first brightness enhancement film layer 205 may alternatively be connected to the second substrate of the second brightness enhancement film layer 206, that is, the second prism column 2062 in the second brightness enhancement film layer 206 is disposed on an upper surface of the second brightness enhancement film layer 206.

In this embodiment of this application, an included angle between the axial direction L1 of the first brightness enhancement film layer 205 and the axial direction L2 of the second brightness enhancement film layer may be 90 degrees.

In this embodiment of this application, the brightness enhancement film structure layer provided in FIG. 7 can effectively improve uniformity of emergent light of the brightness enhancement film structure layer, and expand an angle range of emergent light of the brightness enhancement film structure layer to some extent.

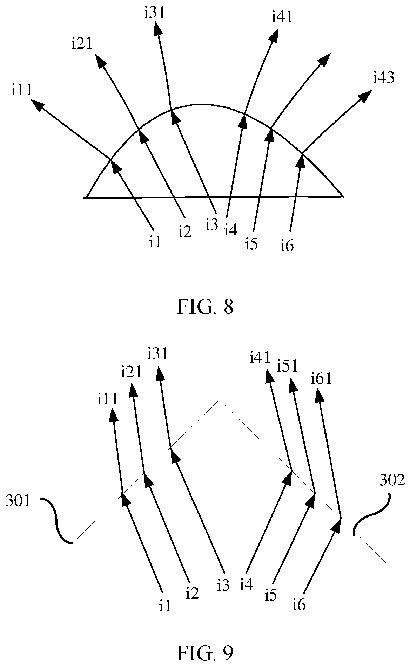

As shown in FIG. 8, when a shape of a cross section of the second prism column 2062 is an arc and the cross section is used as an example, if several parallel beams of light i1, i2, i3, i4, i5, and i6 are incident on an edge line of the cross section, corresponding beams of emergent light i11, i21, i31, i41, i51, and i61 are in different directions, so that light-out directions are dispersed. This can improve uniformity of emergent light of the brightness enhancement film structure layer, and expand an angle range of emergent light of the brightness enhancement film structure layer to some extent.

It may be understood that as shown in FIG. 9, when a shape of a cross section of the second prism column 2062 is a triangle and the cross section is used as an example, if several parallel beams of light i1, i2, and i3 are incident on one side 301 of the cross section, corresponding beams of emergent light i11, i21, and i31 are disposed in parallel and are concentrated to output light in a direction to a vertex angle of the triangle. If several parallel beams of light i4, i5, and i6 are incident on the other side 302 of the cross section, corresponding beams of emergent light i41, i51, and i61 are also disposed in parallel and are concentrated to output light in a direction to the vertex angle of the triangle. Therefore, light-out directions are concentrated, and consequently uniformity of emergent light of the brightness enhancement film structure layer is poor.

In some embodiments, to obtain a prism film structure layer with a larger angle range of emergent light, an angle range of the base angle of the first brightness enhancement film layer 205 may be 37 degrees to 55 degrees, that is, an angle range of the vertex angle may be 70 degrees to 106 degrees.

An angle range of the vertex angle of the second brightness enhancement film layer 206 may be 64 degrees to 70 degrees, that is, an angle range of the base angle may be 55 degrees to 58 degrees.

In some embodiments, a curvature radius of the vertex angle of the first brightness enhancement film layer may be less than or equal to 8 µm. A curvature radius of the vertex angle of the second brightness enhancement film layer may be less than or equal to 24 µm.

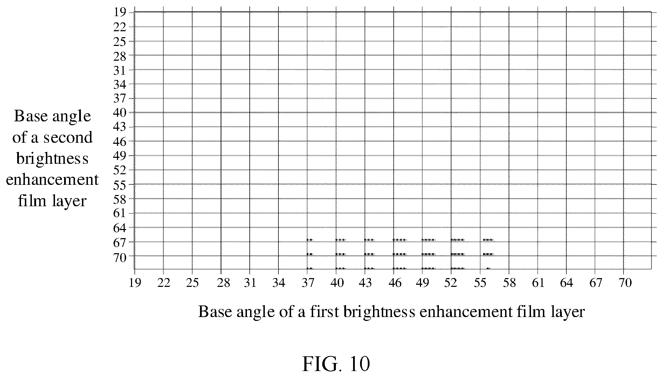

FIG. 10 is a simulation diagram of light field distribution of the backlight structure when the brightness enhancement film structure layer in this embodiment of this application is of the structure shown in FIG. 7, the included angle between the axial direction L1 of the first brightness enhancement film layer 205 and the axial direction L2 of the second brightness enhancement film layer is 90 degrees, and the first brightness enhancement film layer 205 and the second brightness enhancement film layer 206 correspond to different base angles.

In FIG. 10, a horizontal coordinate is the base angle of the first brightness enhancement film layer 205, and a range of the base angle is 0 degrees to 90 degrees; and a vertical coordinate is the base angle of the second brightness enhancement film layer 206, and a range of the base angle is 10 degrees to 70 degrees. In the figure, the black grid indicates that front-view brightness of the backlight structure is greater than 80% of standard brightness. The gray grid indicates that an L75 viewing angle is greater than ±30 degrees, where L75 indicates 75% of maximum front-view brightness, and that a viewing angle range of 75% of the front-view brightness is greater than a deflection range of 30 degrees of a front-view line of sight is indicated.

It can be learned from FIG. 10 that when a range of the base angle of the first brightness enhancement film layer 205 is 37 degrees to 55 degrees, and the vertex angle of the second brightness enhancement film layer 206 is 64 degrees to 70 degrees, front-view brightness of the backlight structure may be greater than 80% of standard brightness, and the viewing angle range of 75% of the front-view brightness is greater than or equal to a deflection range of 30 degrees of a front-view line of sight. It indicates that the solution provided in this embodiment of this application can increase a viewing angle of the liquid crystal display.

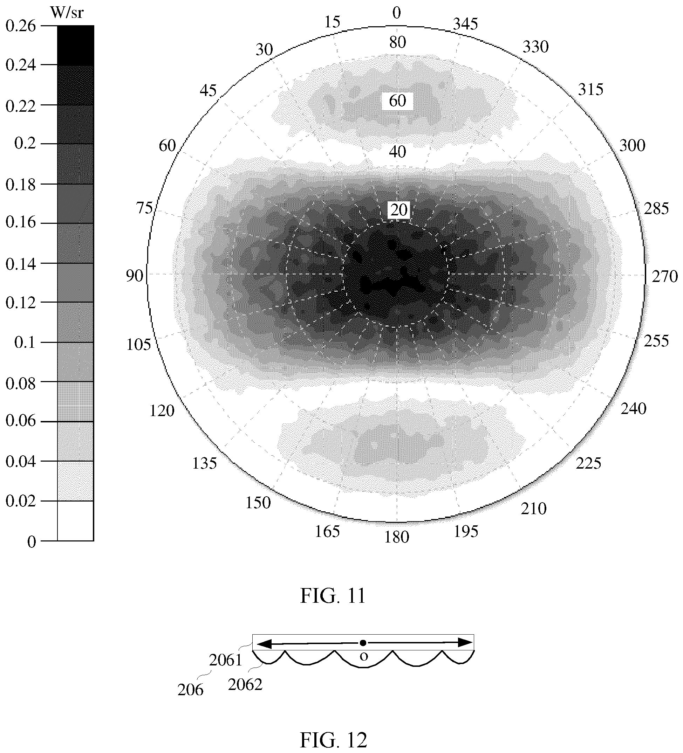

FIG. 11 is a light field distribution diagram of the backlight structure when the brightness enhancement film structure layer in this embodiment of this application is of the structure shown in FIG. 7, the included angle between the axial direction of the first brightness enhancement film layer 205 and the axial direction of the second brightness enhancement film layer is 90 degrees, and the first brightness enhancement film layer 205 and the second brightness enhancement film layer 206 correspond to different base angles.

It can be learned from FIG. 11 that when a range of the base angle of the first brightness enhancement film layer 205 is 37 degrees to 55 degrees, and the vertex angle of the second brightness enhancement film layer 206 is 64 degrees to 70 degrees, front-view brightness of the backlight structure may be greater than 75% of standard brightness, and a viewing angle range of 75% of the front-view brightness is greater than or equal to a deflection range of 40 degrees of a front-view line of sight (L75 viewing angle is greater than ±40 degrees). A viewing angle range of 50% of the front-view brightness is greater than or equal to the deflection range of 40 degrees of the front-view line of sight. The L75 viewing angle is ±55 degrees (L50 viewing angle is greater than ±55 degrees).

In some embodiments, as shown in FIG. 12, base angles of the plurality of second prism columns 2062 in the second brightness enhancement film layer 206 may gradually decrease in a direction from a center of the first substrate 2051 to the edge second prism column 2062. In this way, an angle of emergent light of the second prism column at the edge of the second brightness enhancement film layer 206 can be small. This can reduce a quantity of emergent light to a side surface of the second brightness enhancement film layer, and reduce a light energy loss.

In some embodiments, base angles of the plurality of second prism columns 2062 in the first brightness enhancement film layer 205 may also gradually decrease in a direction from a center of the first substrate 2061 to the edge prism column.

In some embodiments, an embodiment of this application further provides a brightness enhancement film structure layer. A structure of the brightness enhancement film structure layer is similar to the structure in FIG. 7, and a difference lies in that the first prism column 2052 in the first brightness enhancement film layer 205 is also a prism column whose cross section may be in an arc shape.

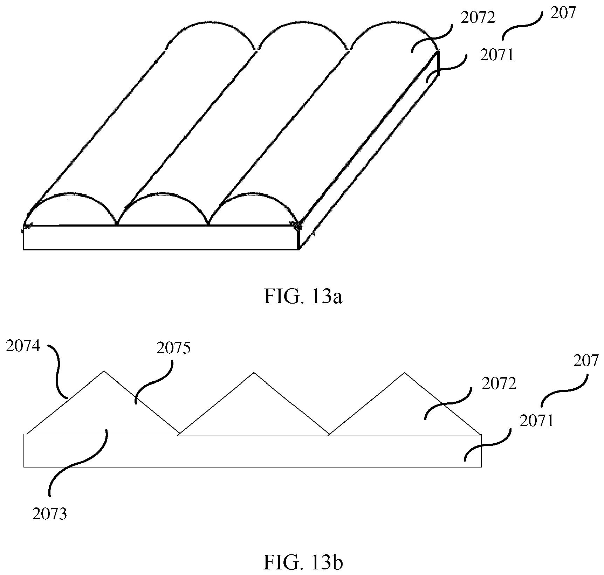

In some embodiments, the brightness enhancement film structure layer of the backlight structure may alternatively include only one third brightness enhancement film layer. FIG. 13a is a diagram of a structure of a brightness enhancement film structure layer. As shown in FIG. 13a, the third brightness enhancement film layer 207 includes a third substrate 2071 and a third optical film layer disposed on an upper surface of the third substrate 2071, and the third prism column layer includes a plurality of third prism columns 2072 that are disposed in parallel. A cross section of each of the plurality of third prism columns 2072 is an arc, and the arc is an image enclosed by a segment of arc and a straight line. The segment of arc may be a part of an arc of an entire circle. The segment of straight line may be a chord corresponding to the segment of arc.

The third substrate 2071 of the third prism film layer 207 is connected to a color conversion film layer 204.

In this embodiment of this application, an included angle between an end point tangent of a connection line between the arc-shaped cross section of the third prism column 2072 and the third substrate 2071 and the connection line may be defined as a base angle of the third prism column 2072. A central angle corresponding to the arc in the arc-shaped cross section of the third prism column 2072 is defined as a vertex angle of the third prism column 2072.

In some embodiments, as shown in FIG. 13b, a cross section of each of the plurality of third prism columns 2072 of the third brightness enhancement film layer 207 may alternatively be a triangle, that is, the third prism column 2072 may be a triangular prism. Each of the plurality of third prism columns 2072 includes a third contact surface 2073 connected to the third substrate 2071 and a fifth light-out surface 2074 and a sixth light-out surface 2075 that are adjacent to the third contact surface 2073. Straight lines on which edges corresponding to each first contact surface 2073 of each of the plurality of third prism columns 2072 are located are parallel. In some embodiments, the fifth light-out surface 2074 and the sixth light-out surface 2075 may be light-out surfaces of a same size.

For ease of description, in this embodiment of this application, an included angle between the fifth light-out surface 2074 and the third contact surface 2073 is defined as a base angle of the third prism column 2072, and an included angle between the fifth light-out surface 2074 and the sixth light-out surface 2075 is defined as a vertex angle of the third prism column 2072.

In some embodiments, the plurality of third prism columns in the third brightness enhancement film layer 207 may be of a same structure, and a curvature radius range of the vertex angle of the third brightness enhancement film layer may be 5 µm to 24 µm. A range of the base angle of the third brightness enhancement film layer 205 may be 31 degrees to 58 degrees, that is, a range of the vertex angle may be 64 degrees to 118 degrees.

In some embodiments, vertex angles of the plurality of third prism columns in the third brightness enhancement film layer 207 gradually increase in a direction from a center of the third brightness enhancement film layer 207 to the edge third prism column 2072.

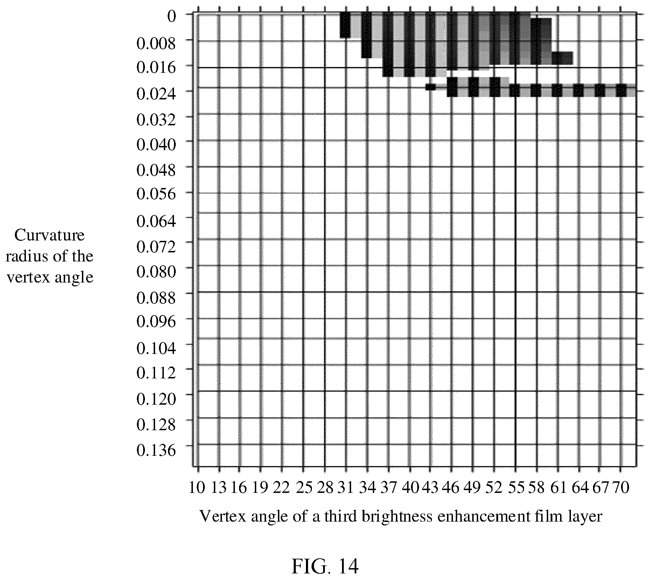

FIG. 14 is a simulation diagram of light field distribution of the backlight structure when the brightness enhancement film structure layer in this embodiment of this application is of the structure shown in FIG. 13a and the third brightness enhancement film layer corresponds to different base angles and different curvature radii.

In FIG. 14, a horizontal coordinate is the base angle of the third brightness enhancement film layer, and a range of the base angle is 0 degrees to 90 degrees; and a vertical coordinate is a curvature radius of the vertex angle, and a range of the curvature radius is 0 µm to 136 µm. In the figure, the black grid indicates that front-view brightness of the backlight structure is greater than 80% of standard brightness. The gray grid indicates that an L75 viewing angle is greater than ±30 degrees, where L75 indicates 75% of maximum front-view brightness, and that a viewing angle range of 75% of the front-view brightness is greater than or equal to a deflection range of 30 degrees of a front-view line of sight is indicated.

It can be learned from FIG. 14 that when a range of the base angle of the third brightness enhancement film layer 205 is 31 degrees to 58 degrees, front-view brightness of the backlight structure may be greater than 80% of standard brightness, and the viewing angle range of 75% of the front-view brightness is greater than or equal to a deflection range of 30 degrees of a front-view line of sight.

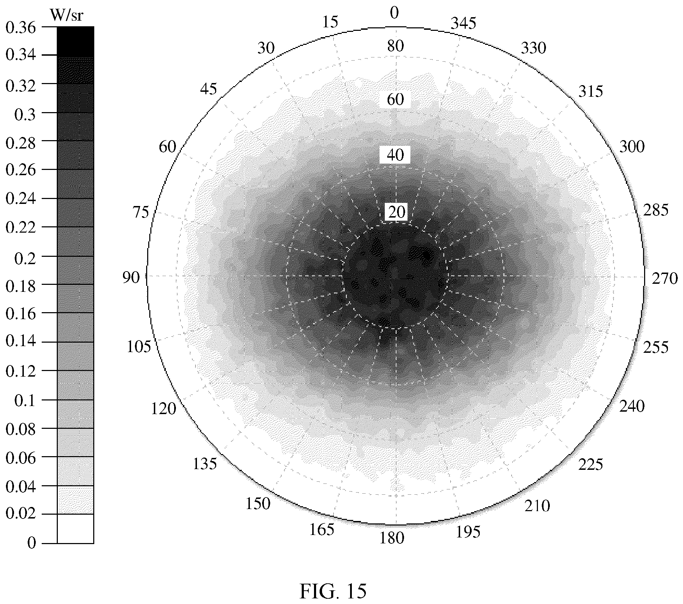

FIG. 15 is a simulation diagram of light field distribution of the backlight structure when the brightness enhancement film structure layer in this embodiment of this application is of the structure shown in FIG. 13a and the third brightness enhancement film layer corresponds to different base angles and different vertex angle curvature radii.

It can be learned from FIG. 15 that when a range of the base angle of the third brightness enhancement film layer is 31 degrees to 58 degrees, that is, a range of the vertex angle is 64 degrees to 118 degrees and the curvature radius of the vertex angle is 5 µm to 24 µm, front-view brightness of the backlight structure may be greater than 75% of standard brightness, and a viewing angle range of 75% of the front-view brightness is greater than or equal to a deflection range of 35 degrees of a front-view line of sight (L75 viewing angle is greater than ±35 degrees). A viewing angle range of 50% of the front-view brightness is greater than or equal to a deflection range of 40 degrees of a front-view line of sight (L50 viewing angle is greater than ±40 degrees).

It may be understood that in this embodiment of this application, the two base angles of the first brightness enhancement film layer 205, the second brightness enhancement film layer 206, or the third brightness enhancement film layer 207 may not be completely the same. In practice, a difference between the two base angles may be 0 degrees to 3 degrees.

It may be understood that in some embodiments, the plurality of first prism columns in the first prism column layer in the first brightness enhancement film layer 205 may not be in a uniform shape. For example, in the first prism column layer, one part of first prism columns may be disposed to be of an arc-shaped column structure, and the other part of first prism columns may be disposed to be of a triangular prism structure.

In some embodiments, the first brightness enhancement film layer 205 may be divided into a middle region, and a first edge region and a second edge region that are disposed on two sides of the middle region. The first prism column 2052 in the middle region may be of an arc-shaped column structure, and the first prism column 2052 in the first edge region and the first prism column 2052 in the second edge region may be of a triangular prism structure. An angle range corresponding to an arc in a cross section of the first prism column in the middle region may be 64 degrees to 70 degrees. The vertex angle of the first prism column 2052 of each of the first edge region and the second edge region may be 90 degrees.

Because a light divergence angle of an arc-shaped structure is larger, the first prism column 2052 in the middle region is disposed as the arc-shaped column structure, so that an emergent angle range of the first brightness enhancement film layer 205 can be effectively expanded. Alight divergence angle of a triangular prism structure with a vertex angle of 90 degrees is small. Therefore, the first prism column 2052 in the first edge region and the second edge region may be disposed as a triangular prism with a vertex angle of 90 degrees. This can prevent much light from being emitted from an edge region of the first brightness enhancement film layer 205, and reduce a light energy loss.

In some embodiments, division of the middle region, the first edge region, and the second edge region may be set based on an actual requirement. For example, a region in which a first prism column 2052 at an edge of one end of the first brightness enhancement film layer 205 is located is used as the first edge region, a region in which a first prism column 2052 at an edge of the other end of the first brightness enhancement film layer 205 is located is used as the second edge region, and a region between the first edge region and the second edge region in the first brightness enhancement film layer 205 is used as the middle region.

It may be understood that the second brightness enhancement film layer 206 and the third brightness enhancement film layer 207 may also be disposed in a manner in which the plurality of prism columns in the first brightness enhancement film layer 205 may not be in a uniform shape. Details are not described herein again.

In conclusion, the backlight structure provided in this embodiment of this application can effectively improve uniformity of emergent light of the brightness enhancement film structure layer, and expand an angle range of emergent light of the brightness enhancement film structure layer.

Another aspect of an embodiment of this application provides a liquid crystal display, including a display component and the foregoing backlight structure.

It may be understood that an electronic device in an embodiment of this application may alternatively be a device such as a liquid cooling cabinet.

Reference to "an embodiment", "some embodiments", or the like described in this specification means that one or more embodiments of this application include a specific feature, structure, or characteristic described with reference to this embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

The foregoing descriptions are merely specific embodiments of this application, but are not intended to limit the protection scope of this application. When no conflict occurs, embodiments of this application and the features in the embodiments may be mutually combined. Therefore, the protection scope of this application shall be subject to a protection scope of the claims.

## Claims

1. A backlight structure (200), comprising a light source layer (201), an optical functional structure layer, and a brightness enhancement film structure layer, wherein the light source layer (201), the optical functional structure layer, and the brightness enhancement film structure layer are stacked in a first direction;
the brightness enhancement film structure layer comprises at least one brightness enhancement film layer (205, 206), and each of the at least one brightness enhancement film layer (205, 206) comprises a substrate (2051, 2061) and a prism column layer (2052, 2062) that are stacked and connected; and
the prism column layer (2052, 2062) comprises at least one protrusion structure disposed on the substrate (2051, 2061);
wherein the at least one brightness enhancement film layer (205, 206) specifically comprises a first brightness enhancement film layer (205) and a second brightness enhancement film layer (206) that are stacked in the first direction;
the first brightness enhancement film layer (205) comprises a first substrate (2051) and a first prism column layer (2052) that are stacked and connected, the first prism column layer (2052) comprises a plurality of first prism columns that are connected in parallel, and all the plurality of first prism columns that are connected in parallel are of prism structures; and
the second brightness enhancement film layer (206) comprises a second substrate (2061) and a second prism column layer (2062) that are stacked and connected, the second prism column layer (2062) comprises a plurality of second prism columns that are connected in parallel, and all the plurality of second prism columns that are connected in parallel are of arc-shaped column structures; and
**characterised in that** central angles corresponding to arcs in cross sections of the plurality of second prism columns in the second prism column layer (2062) gradually increase in a direction from a central location of the second prism column layer (2062) to an edge of the second prism column layer (2062).

2. The backlight structure (200) according to claim 1, wherein the at least one protrusion structure comprises an arc-shaped protrusion structure and/or an angle-shaped protrusion structure.

3. The backlight structure (200) according to claim 2, wherein the arc-shaped protrusion structure is a dot-type arc-shaped structure, a strip-type arc-shaped protrusion structure, or a multi-segment arc-shaped protrusion structure; and
the angle-shaped protrusion structure is a dot-type angle-shaped protrusion structure, a strip-type angle-shaped protrusion structure, and a multi-segment angle-shaped protrusion structure.

4. The backlight structure (200) according to any one of claims 1 to 3, wherein the first substrate (2051) is connected to the optical functional structure layer; and
the first substrate (2051), the first prism column layer (2052), the second prism column layer (2062), and the second substrate (2061) are stacked in the first direction; or the first substrate (2051), the first prism column layer (2052), the second substrate (2061), and the second prism column layer (2062) are stacked in the first direction.

5. The backlight structure (200) according to claim 4, wherein an included angle between an axial direction of the first prism column and an axial direction of the second prism column is 90 degrees.

6. The backlight structure (200) according to claim 5, wherein a curvature radius corresponding to an arc in a cross section of the second prism column is less than or equal to 24 µm.

7. The backlight structure (200) according to any one of claims 1 to 5, wherein the plurality of first prism columns in the first prism column layer (2052) are of structures of a same size.

8. The backlight structure (200) according to claim 7, wherein the first prism column comprises a first contact surface connected to the first substrate (2051), and a first light-out surface and a second light-out surface that are connected to the first contact surface; and
an included angle between the first light-out surface and the first contact surface ranges from 37 degrees to 55 degrees, and an angle range of an included angle between the second light-out surface and the first contact surface is 37 degrees to 55 degrees.

9. The backlight structure (200) according to claims 1 to 6, wherein vertex angles that are of the plurality of first prism columns in the first prism column layer (2052) and that are opposite to the first substrate (2051) gradually increase in the direction from the central location of the second prism column layer (2062) to the edge second prism column.

10. A display (001), comprising a display component (100) and the backlight structure (200) according to any one of claims 1 to 9, wherein the display component is disposed on a surface of a brightness enhancement film structure layer in a first direction.

11. An electronic device, comprising the display according to claim 10.

## Patentansprüche

1. Rückbeleuchtungsstruktur (200), umfassend eine Lichtquellenschicht (201), eine optische Funktionsstrukturschicht und eine Helligkeitsverstärkungsfolienstrukturschicht, wobei die Lichtquellenschicht (201), die optische Funktionsstrukturschicht und die Helligkeitsverstärkungsfolienstrukturschicht in einer ersten Richtung gestapelt sind;
die Helligkeitsverstärkungsfolienstrukturschicht mindestens eine Helligkeitsverstärkungsfolienschicht (205, 206) umfasst und jede der mindestens einen Helligkeitsverstärkungsfolienschicht (205, 206) ein Substrat (2051, 2061) und eine Prismensäulenschicht (2052, 2062) umfasst, die gestapelt und verbunden sind; und
die Prismensäulenschicht (2052, 2062) mindestens eine Vorsprungsstruktur umfasst, die auf dem Substrat (2051, 2061) angeordnet ist;
wobei die mindestens eine Helligkeitsverstärkungsfolienschicht (205, 206) speziell eine erste Helligkeitsverstärkungsfolienschicht (205) und eine zweite Helligkeitsverstärkungsfolienschicht (206) umfasst, die in der ersten Richtung gestapelt sind;
die erste Helligkeitsverstärkungsfolienschicht (205) ein erstes Substrat (2051) und eine erste Prismensäulenschicht (2052) umfasst, die gestapelt und verbunden sind, die erste Prismensäulenschicht (2052) eine Vielzahl erster Prismensäulen umfasst, die parallel geschaltet sind, und die gesamte Vielzahl erster Prismensäulen, die parallel geschaltet sind, Prismenstrukturen angehören; und
die zweite Helligkeitsverstärkungsfolienschicht (206) ein zweites Substrat (2061) und eine zweite Prismensäulenschicht (2062) umfasst, die gestapelt und verbunden sind, die zweite Prismensäulenschicht (2062) eine Vielzahl zweiter Prismensäulen umfasst, die parallel geschaltet sind, und die gesamte Vielzahl zweiter Prismensäulen, die parallel geschaltet sind, bogenförmigen Säulenstrukturen angehören; und
**dadurch gekennzeichnet, dass** mittlere Winkel, die Bögen in Querschnitten der Vielzahl zweiter Prismensäulen in der zweiten Prismensäulenschicht (2062) entsprechen, in einer Richtung von einer mittleren Position der zweiten Prismensäulenschicht (2062) zu einem Rand der zweiten Prismensäulenschicht (2062) allmählich zunehmen.

2. Rückbeleuchtungsstruktur (200) nach Anspruch 1, wobei die mindestens eine Vorsprungsstruktur eine bogenförmige Vorsprungsstruktur und/oder eine winkelförmige Vorsprungsstruktur umfasst.

3. Rückbeleuchtungsstruktur (200) nach Anspruch 2, wobei die bogenförmige Vorsprungstruktur eine punktartige bogenförmige Struktur, eine streifenartige bogenförmige Vorsprungsstruktur oder eine mehrsegmentige bogenförmige Vorsprungstruktur ist; und die winkelförmige Vorsprungsstruktur eine punktartige winkelförmige Vorsprungsstruktur, eine streifenartige winkelförmige Vorsprungsstruktur und eine mehrsegmentige winkelförmige Vorsprungsstruktur ist.

4. Rückbeleuchtungsstruktur (200) nach einem der Ansprüche 1 bis 3, wobei das erste Substrat (2051) mit der optischen Funktionsstrukturschicht verbunden ist; und
das erste Substrat (2051), die erste Prismensäulenschicht (2052), die zweite Prismensäulenschicht (2062) und das zweite Substrat (2061) in der ersten Richtung gestapelt sind; oder das erste Substrat (2051), die erste Prismensäulenschicht (2052), das zweite Substrat (2061) und die zweite Prismensäulenschicht (2062) in der ersten Richtung gestapelt sind.

5. Rückbeleuchtungsstruktur (200) nach Anspruch 4, wobei ein eingeschlossener Winkel zwischen einer axialen Richtung der ersten Prismensäule und einer axialen Richtung der zweiten Prismensäule 90 Grad beträgt.

6. Rückbeleuchtungsstruktur (200) nach Anspruch 5, wobei ein Krümmungsradius, der einem Bogen in einem Querschnitt der zweiten Prismensäule entspricht, kleiner als oder gleich 24 µm ist.

7. Rückbeleuchtungsstruktur (200) nach einem der Ansprüche 1 bis 5, wobei die Vielzahl erster Prismensäulen in der ersten Prismensäulenschicht (2052) Strukturen einer gleichen Größe angehört.

8. Rückbeleuchtungsstruktur (200) nach Anspruch 7, wobei die erste Prismensäule eine erste Kontaktfläche, die mit dem ersten Substrat (2051) verbunden ist, und eine erste Lichtaustrittsfläche und eine zweite Lichtaustrittsfläche, die mit der ersten Kontaktfläche verbunden sind, umfasst; und
ein eingeschlossener Winkel zwischen der ersten Lichtaustrittsfläche und der ersten Kontaktfläche von 37 Grad bis 55 Grad reicht und ein Winkelbereich eines eingeschlossenen Winkels zwischen der zweiten Lichtaustrittsfläche und der ersten Kontaktfläche 37 Grad bis 55 Grad beträgt.

9. Rückbeleuchtungsstruktur (200) nach Anspruch 1 bis 6, wobei Scheitelwinkel, die der Vielzahl erster Prismensäulen in der ersten Prismensäulenschicht (2052) angehören und die dem ersten Substrat (2051) gegenüberliegen, in der Richtung von der mittleren Position der zweiten Prismensäulenschicht (2062) zu der zweiten Randprismensäule allmählich zunehmen.

10. Anzeige (001), umfassend eine Anzeigekomponente (100) und die Rückbeleuchtungsstruktur (200) nach einem der Ansprüche 1 bis 9, wobei die Anzeigekomponente in einer ersten Richtung auf einer Oberfläche einer Helligkeitsverstärkungsfolienstrukturschicht angeordnet ist.

11. Elektronische Vorrichtung, umfassend die Anzeige nach Anspruch 10.

## Revendications

1. Structure de rétroéclairage (200), comprenant une couche de source lumineuse (201), une couche de structure fonctionnelle optique et une couche de structure de film d'amélioration de la luminosité, dans laquelle la couche de source lumineuse (201), la couche de structure fonctionnelle optique et la couche de structure de film d'amélioration de la luminosité sont empilées dans une première direction ;
la couche de structure de film d'amélioration de la luminosité comprend au moins une couche de film d'amélioration de la luminosité (205, 206), et chacune des au moins une couche de film d'amélioration de la luminosité (205, 206) comprend un substrat (2051, 2061) et une couche de colonnes prismatiques (2052, 2062) qui sont empilées et reliées ; et
la couche de colonne prismatique (2052, 2062) comprend au moins une structure en saillie disposée sur le substrat (2051, 2061) ; dans lequel l'au moins une couche de film d'amélioration de la luminosité (205, 206) comprend spécifiquement une première couche de film d'amélioration de la luminosité (205) et une seconde couche de film d'amélioration de la luminosité (206) qui sont empilées dans la première direction ;
la première couche de film d'amélioration de la luminosité (205) comprend un premier substrat (2051) et une première couche de colonnes prismatiques (2052) qui sont empilés et reliés, la première couche de colonnes prismatiques (2052) comprend une pluralité de premières colonnes prismatiques reliées en parallèle, et toutes les pluralités de premières colonnes prismatiques reliées en parallèle sont des structures prismatiques ; et
la seconde couche de film d'amélioration de la luminosité (206) comprend un second substrat (2061) et une seconde couche de colonnes prismatiques (2062) qui sont empilés et reliés, la seconde couche de colonnes prismatiques (2062) comprend une pluralité de secondes colonnes prismatiques reliées en parallèle, et toutes les pluralités de secondes colonnes prismatiques reliées en parallèle sont des structures de colonnes en forme d'arc ; et
**caractérisée en ce que** les angles centraux correspondant aux arcs dans les sections transversales de la pluralité de secondes colonnes prismatiques dans la seconde couche de colonnes prismatiques (2062) augmentent progressivement dans une direction allant d'un emplacement central de la seconde couche de colonnes prismatiques (2062) à un bord de la seconde couche de colonnes prismatiques (2062).

2. Structure de rétroéclairage (200) selon la revendication 1, dans laquelle l'au moins une structure en saillie comprend une structure en saillie en forme d'arc et/ou une structure en saillie en forme d'angle.

3. Structure de rétroéclairage (200) selon la revendication 2, dans laquelle la structure en saillie en forme d'arc est une structure en forme d'arc de type point, une structure en saillie en forme d'arc de type bande ou une structure en saillie en forme d'arc à segments multiples ; et
la structure en saillie en forme d'angle est une structure en forme en saillie en forme d'angle de type point, une structure en saillie en forme d'angle de type bande et une structure en saillie en forme d'angle à segments multiples.

4. Structure de rétroéclairage (200) selon l'une quelconque des revendications 1 à 3, dans laquelle le premier substrat (2051) est relié à la couche de structure fonctionnelle optique ; et
le premier substrat (2051), la première couche de colonnes prismatiques (2052), la seconde couche de colonnes prismatiques (2062) et le second substrat (2061) sont empilés dans la première direction ; ou le premier substrat (2051), la première couche de colonnes prismatiques (2052), le second substrat (2061) et la seconde couche de colonnes prismatiques (2062) sont empilés dans la première direction.

5. Structure de rétroéclairage (200) selon la revendication 4, dans laquelle l'angle inclut entre une direction axiale de la première colonne prismatique et une direction axiale de la seconde colonne prismatique est de 90 degrés.

6. Structure de rétroéclairage (200) selon la revendication 5, dans laquelle un rayon de courbure correspondant à un arc dans une section transversale de la seconde colonne prismatique est inférieur ou égal à 24 µm.

7. Structure de rétroéclairage (200) selon l'une quelconque des revendications 1 à 5, dans laquelle la pluralité de premières colonnes prismatiques dans la première couche de colonnes prismatiques (2052) sont des structures de même taille.

8. Structure de rétroéclairage (200) selon la revendication 7, dans laquelle la première colonne prismatique comprend une première surface de contact reliée au premier substrat (2051), ainsi qu'une première surface d'éclairage et une seconde surface d'éclairage reliées à la première surface de contact ; et
l'angle inclus entre la première surface d'éclairage et la première surface de contact varie entre 37 degrés et 55 degrés, et la plage angulaire de l'angle inclut entre la seconde surface d'éclairage et la première surface de contact est de 37 degrés à 55 degrés.

9. Structure de rétroéclairage (200) selon les revendications 1 à 6, dans laquelle les angles de sommet qui sont de la pluralité de premières colonnes prismatiques dans la première couche de colonnes prismatiques (2052) et qui sont opposés au premier substrat (2051) augmentent progressivement dans la direction de l'emplacement central de la seconde couche de colonnes prismatiques (2062) vers le bord de la seconde colonne prismatique.

10. Écran (001), comprenant un composant d'affichage (100) et la structure de rétroéclairage (200) selon l'une quelconque des revendications 1 à 9, dans lequel le composant d'affichage est disposé sur une surface d'une couche de structure de film d'amélioration de la luminosité dans une première direction.

11. Dispositif électronique, comprenant l'écran selon l'une quelconque la revendication 10.
